# EUROPEAN PATENT SPECIFICATION

(11) **EP 3 357 990 B1**
(45) Date of publication and mention of the grant of the patent: **04.03.2020**
(21) Application number: 16851753.0
(22) Date of filing: 29.09.2016
(51) Int. Cl.: C09J 129/14, C08F 2/44, C08F 8/28, C09J 4/06, C09J 11/06, C09J 163/00

(54) **ADHESIVE**
KLEBEMASSE
ADHÉSIF

(30) Priority: 30.09.2015 JP 2015195000; 27.10.2015 JP 2015210814
(43) Date of publication of application: 08.08.2018
(73) Proprietor: Sekisui Chemical Co., Ltd., Osaka-shi, Osaka 530-0047 (JP)
(72) Inventor: FUKATANI, Juichi, Mishima-gun Osaka 618-0021 (JP); NOMOTO, Hiroyuki, Mishima-gun Osaka 618-0021 (JP)
(74) Representative: Cabinet Beau de Loménie
(86) International application number: PCT/JP2016/078836
(87) International publication number: WO 2017/057582

(56) References cited:
- WO-A1-2015/046583
- JP-A- H04 320 476
- JP-A- H11 199 846
- JP-A- S55 139 410
- JP-A- 2001 098 165
- JP-A- 2001 254 058
- JP-A- 2015 199 932

## Description

### TECHNICAL FIELD

The present invention relates to an adhesive that has excellent adhesiveness to both organic materials (particularly, polycarbonate, acrylic, and nylon) and inorganic materials, is capable of exhibiting excellent transparency and toughness, and also has excellent handleability.

### BACKGROUND ART

Polyvinyl acetal is a resin synthesized from polyvinyl alcohol as a raw material. Polyvinyl acetal has excellent adhesiveness to inorganic materials such as glass and metal because of the presence of the acetyl group, hydroxy group, and acetal group in the side chains, and also exhibits excellent transparency and toughness. Additionally, the resin physical properties of polyvinyl acetal can be changed by changing the ratio of the side chain groups. Owing to these characteristics, polyvinyl acetal is used in a wide range of applications, including interlayer films for automotive laminated glass and ceramic green sheets.

Attempts have been made to develop adhesives taking advantage of the excellent toughness of polyvinyl acetal (e.g., Patent Literature 1). Unfortunately, adhesives containing polyvinyl acetal are poor in adhesiveness to organic materials such as polycarbonate, acrylic, and nylon. Although there are many adhesives having excellent adhesiveness to organic materials, such as epoxy adhesives, there is yet no adhesive having excellent adhesiveness not only to organic materials but also to inorganic materials such as metal.

In addition, polyvinyl acetal disadvantageously has poor handleability as an adhesive, as it is solid at a normal temperature of around 23°C and needs to be heated and softened for adhesion. To overcome the situation, use of polyvinyl acetal in the form of a solution in an organic solvent has been considered. However, this requires a step of removing the organic solvent, and some of the organic solvent may disadvantageously remain even after the removing step.

### CITATION LIST

### - Patent Literature

Patent Literature 1: JP H07-331187 A

### SUMMARY OF INVENTION

### - Technical problem

In view of the situation, the present invention aims to provide an adhesive that has excellent adhesiveness to both organic materials (particularly, polycarbonate, acrylic, and nylon) and inorganic materials, is capable of exhibiting excellent transparency and toughness, and also has excellent handleability.

### - Solution to problem

The present invention includes an adhesive containing a modified polyvinyl acetal having an imine structure, a reactive diluent, and a polymerization initiator.

The present invention will be described in detail below.

The present inventors made intensive studies to find out that an adhesive containing a modified polyvinyl acetal having an imine structure together with a reactive diluent and a polymerization initiator can be in a liquid (sol) state at normal temperature (23°C) and thus have excellent handleability, and that reacting the reactive diluent to cause crosslinking and curing reactions allows the adhesive to exhibit excellent adhesiveness to both organic materials and inorganic materials. The inventors thus completed the present invention. It is to be noted that the reactive diluent after the reaction is less likely to bleed out.

The adhesive of the present invention contains a modified polyvinyl acetal having an imine structure.

The modified polyvinyl acetal having an imine structure (hereinafter, also referred to simply as a "modified polyvinyl acetal") contains a constitutional unit having an imine structure. Combining such a modified polyvinyl acetal with a reactive diluent and a polymerization initiator allows the adhesive of the present invention to exhibit excellent adhesiveness to both organic materials and inorganic materials.

The imine structure as used herein means a structure having a C=N bond.

Examples of the constitutional unit having an imine structure include a constitutional unit represented by Formula (1) below.

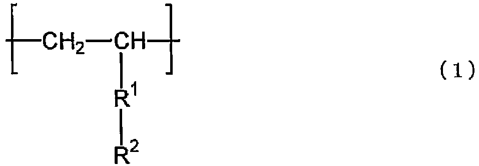

In Formula (1), R¹ represents a single bond or an alkylene group and R² represents a group having an imine structure.

In Formula (1), when R¹ is an alkylene group, the lower limit of the carbon number of the alkylene group is preferably 1 and the upper limit thereof is preferably 12. When the carbon number of the alkylene group is greater than 12, optimal strength may not be achieved. When R¹ is an alkylene group, the upper limit of the carbon number of the alkylene group is more preferably 5.

In Formula (1), when R¹ is an alkylene group, examples of the alkylene group include linear alkylene groups such as methylene, dimethylene (ethylene), trimethylene (n-propylene), tetramethylene (n-butylene), pentamethylene, hexamethylene, octamethylene, and decamethylene groups, branched alkylene groups such as methylmethylene, methylethylene, 1-methylpentylene, and 1,4-dimethylbutylene groups, and cyclic alkylene groups such as cyclopropylene, cyclobutylene, and cyclohexylene groups. In particular, linear alkyl groups such as methylene, dimethylene (ethylene), trimethylene (n-propylene), and tetramethylene (n-butylene) groups are preferred, and methylene and dimethylene (ethylene) groups are more preferred.

Examples of R² include a functional group represented by Formula (2) below.

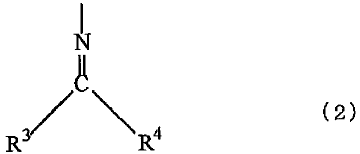

In Formula (2), R³ represents a hydrogen atom or a C1-C18 hydrocarbon group and R⁴ represents a C1-C18 hydrocarbon group.

Examples of the hydrocarbon group include saturated hydrocarbon groups, unsaturated hydrocarbon groups, and aromatic hydrocarbon groups. The hydrocarbon group may consist only of a saturated hydrocarbon group, an unsaturated hydrocarbon group, or an aromatic hydrocarbon group, or may include two or more thereof.

Examples of the saturated hydrocarbon groups include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. In particular, methyl, ethyl, and n-propyl groups are preferred.

Examples of the aromatic hydrocarbon groups include phenyl, toluyl, xylyl, t-butylphenyl, and benzyl groups.

In the constitutional unit having an imine structure in the modified polyvinyl acetal, preferably R¹ is a single bond, R³ is a hydrogen atom, and R⁴ is a methyl or ethyl group.

In the modified polyvinyl acetal, the lower limit of the amount of the constitutional unit having an imine structure is preferably 0.1 mol% and the upper limit thereof is preferably 20 mol%.

When the amount of the constitutional unit having an imine structure is within this range, the adhesive can exhibit sufficient adhesiveness to both organic materials and inorganic materials. In addition, the modified polyvinyl acetal can be easily produced by acetalization described later. The lower limit of the amount of the constitutional unit having an imine structure is more preferably 1.0 mol% and the upper limit thereof is more preferably 15 mol%.

The modified polyvinyl acetal may further contain a constitutional unit having an amino group or an amide structure. The presence of the amino group or the amide structure enables formation of a crosslinking structure between the modified polyvinyl acetal with the reactive diluent. In particular, the amino group or the amide structure is preferably in the side chain. The amino group or the amide structure may be directly bonded to carbon constituting the main chain of the modified polyvinyl acetal or bonded via a linking group such as an alkylene group. The amino group may be a primary amine or a secondary amine.

The amino group is preferably -NH₂.

The amide structure herein means a structure having - C(=O)-NH-.

The constitutional unit having an amino group preferably has a structure represented by Formula (3) below. The constitutional unit having an amide group preferably has a structure represented by Formula (4) below.

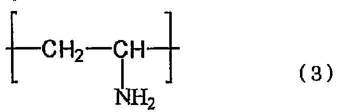

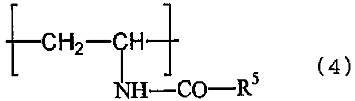

In Formula (4), R⁵ represents a hydrogen atom or a C1-C10 hydrocarbon group.

Examples of the hydrocarbon group include alkyl, alkenyl, cycloalkyl, and cycloalkenyl groups.

When the modified polyvinyl acetal contains the constitutional unit having an amino group or an amide structure, the lower limit of the amount of the constitutional unit having an amino group or an amide structure is preferably 0.1 mol% and the upper limit thereof is preferably 20 mol%. When the amount of the constitutional unit having an amino group or an amide structure is within this range, desired effects can be achieved. The lower limit of the amount of the constitutional unit having an amino group or an amide structure is more preferably 0.5 mol%, and the upper limit thereof is more preferably 10 mol%.

The degree of acetalization of the modified polyvinyl acetal is not limited. The lower limit thereof is preferably 60 mol% and the upper limit thereof is preferably 90 mol%. When the degree of acetalization is within this range, the modified polyvinyl acetal has excellent compatibility with the reactive diluent, and the resulting adhesive can have excellent handleability. In addition, the modified polyvinyl acetal can be easily precipitated in the synthesis process by a precipitation method. The lower limit of the degree of acetalization is more preferably 65 mol% and the upper limit thereof is more preferably 85 mol%.

The degree of acetalization of the modified polyvinyl acetal is a value in percentage of the mole fraction (mol%) obtained by dividing the amount of ethylene groups to which acetal groups are bonded by the total amount of ethylene groups of the main chain. The degree of acetalization can be determined by measuring the acetyl group content and the vinyl alcohol content (content rate of hydroxy groups) by the method in conformity with JIS K6728 "Testing methods for polyvinyl butyral", calculating the mole fractions based on the measurement results, and subtracting the acetyl group content and the vinyl alcohol content from 100 mol%.

The hydroxy group content of the modified polyvinyl acetal is not limited. The lower limit thereof is preferably 15 mol% and the upper limit thereof is preferably 35 mol%. When the hydroxy group content is within this range, higher adhesiveness can be exhibited. The lower limit of the hydroxy group content is more preferably 17 mol% and the upper limit thereof is more preferably 25 mol%.

The hydroxy group content of the modified polyvinyl acetal is a value in percentage of the mole fraction (mol%) obtained by dividing the amount of ethylene groups to which hydroxy groups are bonded by the total amount of ethylene groups of the main chain. The amount of ethylene groups to which hydroxy groups are bonded can be determined, for example, by the method in conformity with JIS K6728 "Testing methods for polyvinyl butyral".

The acetyl group content of the modified polyvinyl acetal is not limited. The lower limit thereof is preferably 0.0001 mol% and the upper limit thereof is preferably 15 mol%. The lower limit of the acetyl group content is more preferably 0.01 mol% and the upper limit thereof is more preferably 10 mol%. The lower limit is still more preferably 0.1 mol% and the upper limit is still more preferably 5 mol%.

The acetyl group content of the modified polyvinyl acetal is a value in percentage of the mole fraction (mol%) obtained by subtracting the amount of ethylene groups to which acetal groups are bonded and the amount of ethylene groups to which hydroxy groups are bonded from the total amount of ethylene groups of the main chain and then dividing the obtained value by the total amount of ethylene groups of the main chain. The amount of ethylene groups to which acetal groups are bonded can be determined, for example, in conformity with JIS K6728 "Testing methods for polyvinyl butyral".

The degree of polymerization of the modified polyvinyl acetal is not limited. The lower limit thereof is preferably 100 and the upper limit thereof is preferably 4,500. When the degree of polymerization of the modified polyvinyl acetal is within this range, an adhesive that has high adhesiveness and has excellent handleability at normal temperature can be obtained. The lower limit of the degree of polymerization is more preferably 150 and the upper limit thereof is more preferably 4,000.

The modified polyvinyl acetal may be prepared by, for example, a method including copolymerizing a monomer having the imine structure and vinyl acetate to give polyvinyl acetate, saponifying the polyvinyl acetate to give polyvinyl alcohol, and acetalizing the polyvinyl alcohol by a conventionally known method. Alternatively, the modified polyvinyl acetal may be prepared by a method including acetalizing polyvinyl alcohol containing a constitutional unit having an amino group or an amide structure by a conventionally known method to introduce an imine structure. Alternatively, the modified polyvinyl acetal may be prepared by a method including modifying polyvinyl alcohol containing a constitutional unit having an amino group or an amide structure to give modified polyvinyl alcohol having an imine structure and acetalizing the modified polyvinyl alcohol by a conventionally known method. Alternatively, unmodified polyvinyl acetal may be modified to introduce an imine structure.

Preferred among these is a method including acetalizing polyvinyl alcohol containing a constitutional unit having an amino group or an amide structure by a conventionally known method to introduce an imine structure. In the case of using such a method, the imine structure can be easily introduced by adding excess amounts of an aldehyde and an acid catalyst for acetalization.

In the case of using such a method, the constitutional unit having an amino group or an amide structure and the constitutional unit having an imine structure can be confirmed by, for example, checking the spectrum of the amino group (around 1600 cm⁻¹) by FT-IR or the spectrum of the imine structure (160 to 170 ppm) by ¹³C-NMR.

The acetalization may be conducted by a known method. Preferably, it is conducted in an aqueous solvent, a mixed solvent containing water and an organic solvent compatible with water, or an organic solvent.

Examples of the organic solvent compatible with water include alcohol organic solvents.

Examples of the organic solvent include alcohol organic solvents such as methanol, ethanol, n-propanol, isopropanol, n-butanol, and tert-butanol, aromatic organic solvents such as xylene, toluene, ethylbenzene, and methyl benzoate, aliphatic ester solvents such as methyl acetate, ethyl acetate, butyl acetate, methyl propionate, ethyl propionate, methyl butyrate, ethyl butyrate, methyl acetoacetate, and ethyl acetoacetate, ketone solvents such as acetone, methyl ethyl ketone, methyl isobutyl ketone, cyclohexanone, methylcyclohexanone, benzophenone, and acetophenone, lower paraffin solvents such as hexane, pentane, octane, cyclohexane, and decane, ether solvents such as diethyl ether, tetrahydrofuran, ethylene glycol dimethyl ether, ethylene glycol diethyl ether, and propylene glycol diethyl ether, amide solvents such as N,N-dimethylformamide, N,N-dimethylacetamide, N-methylpyrrolidone, and acetanilide, and amine solvents such as aqueous ammonia, trimethylamine, triethylamine, n-butylamine, di-n-butylamine, tri-n-butylamine, aniline, N-methylaniline, N,N-dimethylaniline, and pyridine. These solvents may be used alone, or two or more solvents may be used in combination. Particularly preferred among these are ethanol, n-propanol, isopropanol, and tetrahydrofuran from the viewpoint of resin solubility and ease in purification.

The acetalization is preferably conducted in the presence of an acid catalyst.

Any acid catalyst may be used. Examples thereof include hydrogen halides such as hydrochloric acid, mineral acids such as nitric acid, sulfuric acid, and phosphoric acid, carboxylic acids such as formic acid, acetic acid, and propionic acid, and sulfonic acids such as methanesulfonic acid, ethanesulfonic acid, benzenesulfonic acid, and paratoluenesulfonic acid. These acid catalysts may be used alone, or two or more of the compounds may be used in combination. In particular, hydrochloric acid, nitric acid, and sulfuric acid are preferred, with hydrochloric acid being particularly preferred.

In the method including acetalizing polyvinyl alcohol containing a constitutional unit having an amino group or an amide structure to introduce an imine structure, an imine structure can be easily introduced by adding the acid catalyst in an amount of 1.0% by weight or more of the total amount, for example.

The aldehyde to be used for acetalization may be an aldehyde having a C1-C10 acyclic aliphatic group, a C1-C10 cycloaliphatic group, or a C1-C10 aromatic group, for example. These aldehydes may be conventionally known aldehydes. The aldehyde to be used for acetalization reaction is not limited. Examples thereof include aliphatic aldehydes such as formaldehyde, acetaldehyde, propionaldehyde, n-butyraldehyde, isobutyraldehyde, n-valeraldehyde, n-hexylaldehyde, 2-ethylbutyraldehyde, 2-ethylhexylaldehyde, n-heptylaldehyde, n-octylaldehyde, n-nonylaldehyde, and n-decylaldehyde and aromatic aldehydes such as benzaldehyde, cinnamaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. These aldehydes may be used alone or in combination of two or more thereof. Preferred among the aldehydes are butyraldehyde, 2-ethylhexylaldehyde, and n-nonylaldehyde, which are excellent in acetalization reactivity and have a sufficient internal plasticizing effect on the resulting resin to give good flexibility thereto. Butyraldehyde is more preferred.

The amount of the aldehyde to be added can be appropriately determined according to the target degree of acetalization of the modified polyvinyl acetal. In particular, when the amount of the aldehyde relative to 100 mol% of the polyvinyl alcohol is 60 to 95 mol%, preferably 70 to 90 mol%, advantageously the acetalization reaction is efficiently performed and unreacted aldehyde is easily removed.

The adhesive of the present invention contains a reactive diluent.

The reactive diluent as used herein means an agent which is compatible with the modified polyvinyl acetal and capable of turning the polyvinyl acetal into a liquid (sol), and whose molecules react with each other to be crosslinked and cured.

Examples of the reactive diluent include (meth)acrylic reactive diluents such as (meth)acrylic monomers and (meth)acrylic oligomers, and epoxy reactive diluents such as epoxy monomers and epoxy oligomers. These reactive diluents may be used alone or in combination of two or more thereof.

The (meth)acrylic monomer used may be a monofunctional, bifunctional, or tri- or higher functional (meth)acrylic monomer. Examples of the monofunctional (meth)acrylic monomer include methyl (meth)acrylate, ethyl (meth)acrylate, propyl (meth)acrylate, butyl (meth)acrylate, 2-hydroxyethyl (meth)acrylate, diethylene glycol monoethyl ether (meth)acrylate, isobornyl (meth)acrylate, 3-methoxybutyl (meth)acrylate, 2-acryloyloxyethyl-2-hydroxypropyl phthalate, and 2-methacryloyloxyethyl-2-hydroxylpropyl phthalate.

Examples of the bifunctional (meth)acrylic monomer include ethylene glycol di(meth)acrylate, diethylene glycol di(meth)acrylate, tetraethylene glycol di(meth)acrylate, 1,6-hexanediol dimethacrylate, 1,9-nonanediol diacrylate, polytetramethylene glycol di(meth)acrylate, neopentyl glycol di(meth)acrylate, 1,3-butylene glycol di(meth)acrylate, and 2,2-bis[4-(methacryloxyethoxy)phenyl]propane di(meth)acrylate.

Examples of the tri- or higher functional (meth)acrylic monomer include trimethylolpropane triacrylate, pentaerythritol triacrylate, pentaerythritol trimethacrylate, pentaerythritol tetramethacrylate, dipentaerythritol pentaacrylate, dipentaerythritol hexaacrylate, tri(2-acryloyloxy ethyl)phosphate, tetramethyrolmethane tri(meth)acrylate, tetramethylol propane tetra(meth)acrylate, triallyl isocyanurate, and derivatives thereof.

The above (meth)acrylic monomers may be used alone or in combination of two or more thereof. In particular, preferred are (meth)acrylic monomers as they are particularly excellent in compatibility with the modified polyvinyl acetal. More specifically, preferred are methyl (meth)acrylate, ethyl (meth)acrylate, propyl (meth)acrylate, butyl (meth)acrylate, 2-hydroxyethyl (meth)acrylate, glycidyl (meth)acrylate, and urethane (meth)acrylate.

Examples of the (meth)acrylic oligomers include those including a plurality of the (meth)acrylic monomers bonded to each other. In particular, preferred is a (meth)acrylic oligomer prepared from the acrylic monomer because such an oligomer is particularly excellent in compatibility with the polyvinyl acetal.

Examples of the epoxy monomers include: glycidyl ester epoxy monomers of bisphenol A type, bisphenol F type, bisphenol AD type, bromine-containing bisphenol A type, phenol novolac type, cresol novolac type, polyphenol type, linear aliphatic type, butadiene type, urethane type and the like; aliphatic glycidyl ester epoxy monomers such as glycidyl hexahydrophthalate, dimer glycidyl ester, aromatic type, cycloaliphatic type and like epoxy monomers; methyl-substituted epoxy monomers of bisphenol type, ester type, high-molecular-weight ether ester type, ether ester type, brominated type, novolac type, and the like; heterocyclic epoxy monomers; glycidyl amine epoxy monomers such as triglycidyl isocyanurate and tetraglycidyl diaminodiphenyl methane; linear aliphatic epoxy monomers such as epoxylated polybutadiene and epoxy soybean oil; cycloaliphatic epoxy monomers; naphthalene novolac-type epoxy monomers; and diglycidyl oxynaphthalene epoxy monomers.

Examples of the epoxy oligomers include those including a plurality of the epoxy monomers bonded to each other. Preferred among these are epoxy oligomers prepared from the epoxy monomers.

The amount of the reactive diluent in the adhesive of the present invention is not limited. The lower limit thereof is preferably 60 parts by weight relative to 100 parts by weight of the modified polyvinyl acetal and the upper limit thereof is preferably 5,000 parts by weight. When the amount of the reactive diluent is within this range, the resulting adhesive can have excellent handleability at room temperature and particularly excellent adhesiveness to organic materials and inorganic materials. The lower limit of the amount of the reactive diluent is more preferably 70 parts by weight and the upper limit thereof is more preferably 3,000 parts by weight. The lower limit is still more preferably 80 parts by weight and the upper limit is still more preferably 2,000 parts by weight. The lower limit is further preferably 90 parts by weight and the upper limit is further preferably 1,500 parts by weight. The upper limit is particularly preferably 1,000 parts by weight. The upper limit is most preferably 300 parts by weight.

The polymerization initiator may be appropriately selected according to the type of the reactive diluent and the type of the trigger for crosslinking and curing of the reactive diluent. When heat is selected as the trigger, a thermal polymerization initiator is used, and when light is selected as the trigger, a photopolymerization initiator is used. When immediate curing is required and the reactive diluent is a (meth)acrylic reactive diluent, examples of usable polymerization initiators include: thermal polymerization initiators such as monoacylphosphine oxide compounds including 2,6-dimethylbenzoyldiphenylphosphine oxide, 2,4,6-trimethylbenzoyldiphenylphosphine oxide, 2,6-dichlorobenzoyldiphenylphosphine oxide, and 2,6-dimethoxybenzoyldiphenylphosphine oxide, bisacylphosphine oxide compounds including bis(2,6-dimethoxybenzoyl)-2,4,4-trimethylpentylphosphine oxide, bis(2,6-dimethylbenzoyl)-2,4,4-trimethylpentylphosphine oxide, bis(2,6-dimethylbenzoyl)-2,4,4-trimethylpentylphosphine oxide, bis(2,4,6-trimethylbenzoyl)-2,4,4-trimethylpentylphosphine oxide, bis(2,6-dichlorobenzoyl)-2,4,4-trimethylpentylphosphine oxide, bis(2,4,6-trimethylbenzoyl)-phenylphosphine oxide, and bis(2,4,6-trimethoxybenzoyl)-phenylphosphine oxide, benzophenol, acetophenone, 4,4'-dichlorobenzophenone, methylphenyl glyoxylate, thioxanthone, 2,4-dimethylthioxanthone, 2-methylthioxanthone, 2-chlorothioxanthone, diisopropylthioxanthone, 2,4-diethylthioxanthone, 2,4-dichlorothioxanthone, 2-isopropylthioxanthone, bis(η5-2,4-cyclopentadien-1-yl)-bis(2,6-difluoro-3-(1H-pyrrol-1-yl)-phenyl)titanium, 3,3',4,4'-tetra(t-butylperoxycarbonyl)benzophenone, camphorquinone, dibenzosuberone, 2-ethylanthraquinone, 4',4''-diethylisophthalophenone, 9,10-phenanthrenequinone, 1-phenyl-1,2-propanedione-2-ethoxycarbonyl oxime, benzophenone, methyl ortho-benzoylbenzoate, ortho-benzoylbenzoic acid, 4-benzoyl-4'-methyldiphenyl sulfide, 2,2-dimethoxy-1,2-diphenylethan-1-one, 2-benzyl-2-dimethylamino-1-(4-morpholinophenyl)-butanone-1,2-methyl-1-[4-(methylthio)phenyl]-2-morpholinopropan-1-one, 1-hydroxycyclohexyl-phenyl-ketone, 1-[4-(2-hydroxyethoxy)-phenyl]-2-hydroxy-2-methyl-1-propan-1-one, 2-hydroxy-2-methyl-1-phenylpropan-1-one, 4-phenylbenzophenone, hydroxybenzophenone, 3,3'-dimethyl-4-methoxybenzophenone, benzoin, benzoin ethyl ether, benzoin isopropyl ether, benzoin isobutyl ether, 4-phenoxydichloroacetophenone, 4-t-butyl-dichloroacetophenone, 4-t-butyl-trichloroacetophenone, diethoxyacetophenone, 1-(4-isopropylphenyl)-2-hydroxy-2-methylpropan-1-one, 1-(4-dodecylphenyl)-2-hydroxy-2-methylpropan-1-one, 4-(2-hydroxyethoxy)-phenyl(2-hydroxy-2-propyl)ketone, bis(4-n-decanylphenyl)iodonium hexafluorophosphate, bis(a-n-dodecanylphenyl)iodonium hexafluoroantimonate, bis(4-tert-butylphenyl)iodonium bis(perfluorobutanesulfonyl)imide, bis(4-t-butylphenyl)iodonium hexafluorophosphate, diphenyliodonium hexafluoroarsenate, diphenyliodonium trifluoromethanesulfonate, 2-(3,4-dimethoxystyryl)-4,6-bis(trichloromethyl)-1,3,5-triazine, 2-[2-(furan-2-yl)vinyl]-4,6-bis(trichloromethyl)-1,3,5-triazine, 4-isopropyl-4'-methyldiphenyliodonium tetrakis(pentafluorophenyl)borate, 2-(4-methoxyphenyl)-4,6-bis(trichloromethyl)-1,3,5-triazine, triphenylsulfonium tetrafluoroborate, tri-p-tolylsulfonium hexafluorophosphate, tri-p-tolylsulfonium trifluoromethanesulfonate, nifedipine, 2,5-dimethylhexane-2,5-dihydroperoxide, 2,5-dimethyl-2,5-di(t-butylperoxy)hexane-3-di-t-butyl peroxide, t-butyl cumyl peroxide, 2,5-dimethyl-2,5-di(t-butylperoxy)hexane, dicumyl peroxide, α,α'-bis(t-butylperoxyisopropyl)benzene, n-butyl-4,4-bis(t-butylperoxy)valerate, 2,2-bis(t-butylperoxy)butane, t-butyl peroxy-3,5,5-trimethylhexanoate, 1,1-bis(t-butylperoxy)cyclohexane, 1,1-bis(t-butylperoxy)-3,3,5-trimethylcyclohexane, t-butyl peroxybenzoate, benzoyl peroxide, t-butyl peroxyacetate, methyl ethyl ketone peroxide, 2,5-dimethyl-2,5-bis(t-butylperoxy)-3,3,5-trimethylcyclohexane, 1,1-bis(t-butylperoxy)cyclohexane, methyl ethyl ketone peroxide, 2,5-dimethylhexyl-2,5-bisperoxybenzoate, t-butyl hydroperoxide, p-menthane hydroperoxide, p-chlorobenzoyl peroxide, t-hexyl peroxypivalate, hydroxyheptyl peroxide, chlorohexanone peroxide, octanoyl peroxide, decanoyl peroxide, lauroyl peroxide, cumyl peroxyoctoate, succinic acid peroxide, acetyl peroxide, t-butylperoxy(2-ethylhexanoate), m-toluoyl peroxide, t-butyl peroxyisobutyrate, and 2,4-dichlorobenzoyl peroxide; and photopolymerization initiators such as persulfates, organic peroxides, and azo compounds.

For example, when the reactive diluent is an epoxy reactive diluent, examples of usable polymerization initiators include: thermal polymerization initiators such as imidazoles, quaternary ammonium salts, phosphorous compounds, amines, phosphines, phosphonium salts, bicyclic amidines and salts thereof, acid anhydrides, novolac phenolic resins obtainable by condensation reaction of phenol, cresol, xylenol, resorcin, or the like with formaldehyde, polymercapto resins such as liquid polymercaptan and polysulfide, and amides; and photopolymerization initiators containing a compound containing a combination of a cation such as diphenyliodonium, 4-methoxydiphenyliodonium, bis(4-methylphenyl)iodonium, bis(4-tert-butylphenyl)iodonium, bis(dodecylphenyl)iodonium, diphenyl-4-thiophenoxyphenylsulfonium, bis[4-(diphenylsulfonio)-phenyl]sulfide, bis[4-(di(4-(2-hydroxyethyl)phenyl)sulfonio)-phenyl]sulfide, or η5-2,4-(cyclopentadiphenyl)[1,2,3,4,5,6-q-(methylethyl)benzene1-iron (1+) and an anion such as tetrafluoroborate, hexafluorophosphate, triphenyl hexafluorophosphate, or hexafluoroarsenate.

These polymerization initiators may be used alone or in combination of two or more thereof.

The amount of the polymerization initiator in the adhesive of the present invention is not limited. For example, when a (meth)acrylic reactive diluent and a thermal polymerization initiator are used, the lower limit of the amount of the polymerization initiator relative to 100 parts by weight of the reactive diluent is preferably 0.01 parts by weight and the upper limit thereof is preferably 10 parts by weight. The lower limit is more preferably 0.1 parts by weight and the upper limit is more preferably 5 parts by weight. When, for example, an epoxy reactive diluent and a thermal polymerization initiator are used, the lower limit relative to 100 parts by weight of the reactive diluent is preferably 1 part by weight and the upper limit is preferably 300 parts by weight. The lower limit is more preferably 10 parts by weight and the upper limit is more preferably 150 parts by weight. When the amount of the polymerization initiator is within this range, the reactive diluent can sufficiently react, so that the adhesive exhibit high adhesiveness to organic materials and inorganic materials. In addition, the polymerization initiator remaining after the reaction is less likely to bleed out.

The adhesive of the present invention may further contain a plasticizer.

The plasticizer is not limited, and may be a conventionally known plasticizer used with polyvinyl acetal. Examples of the plasticizer include organic acid ester plasticizers such as monobasic organic acid esters and polybasic organic acid esters, and phosphoric acid plasticizers such as organophosphate plasticizers and organophosphite plasticizers. Preferred among these are organic acid ester plasticizers. These plasticizers may be used alone or in combination of two or more thereof. The plasticizer is preferably a liquid plasticizer.

The monobasic organic acid ester is not particularly limited, and examples thereof include glycol esters obtainable by reaction between a monobasic organic acid (e.g., butyric acid, isobutyric acid, caproic acid, 2-ethylbutyric acid, heptanoic acid, n-octylic acid, 2-ethylhexylic acid, pelargonic acid (n-nonylic acid), decylic acid) and a glycol (e.g., triethylene glycol, tetraethylene glycol, tripropylene glycol).

The polybasic organic acid ester is not particularly limited, and examples thereof include ester compounds obtainable by reaction between a polybasic organic acid (e.g., adipic acid, sebacic acid, azelaic acid) and a C4-C8 linear or branched alcohol.

The organic acid ester plasticizer is preferably a diester plasticizer represented by the following formula. The use of the diester plasticizer improves filling properties when the adhesive of the present invention is used for bonding and filling between a touch panel and another component or between transparent conductive films included in a touch panel in production of a personal digital assistant, for example.

R⁶-CO-(-R⁸-O-)ₚ-CO-R⁷

In the formula, R⁶ and R⁷ each represent a C5-C10 (preferably C6-C10) organic group, R⁸ represents an ethylene, isopropylene, or n-propylene group, and p represents an integer of 3 to 10.

Specific examples of the organic acid ester plasticizer include triethylene glycol-di-2-ethylbutyrate, triethylene glycol-di-2-ethylhexanoate, triethylene glycol dicaprylate, triethylene glycol-di-n-octanoate, triethylene glycol-di-n-heptanoate, tetraethylene glycol-di-n-heptanoate, tetraethylene glycol-di-2-ethylhexanoate, dibutyl sebacate, dioctyl azelate, dibutyl carbitol adipate, ethylene glycol-di-2-ethyl butyrate, 1,3-propylene glycol-di-2-ethyl butyrate, 1,4-butylene glycol-di-2-ethylbutyrate, diethylene glycol-di-2-ethylbutyrate, diethylene glycol-di-2-ethylhexanoate, dipropylene glycol-di-2-ethylbutyrate, triethylene glycol-di-2-ethylpentanoate, tetraethylene glycol-di-2-ethylbutyrate, diethylene glycol dicaprylate, dihexyl adipate, dioctyl adipate, hexylcyclohexyl adipate, diisononyl adipate, heptylnonyl adipate, oil-modified alkyd sebacate, mixtures of phosphate esters and adipic acid esters, and mixed type adipic acid esters prepared from a C4-C9 alkyl alcohol and a C4-C9 cyclic alcohol.

The organophosphate plasticizers are not particularly limited, and examples thereof include tributoxyethyl phosphate, isodecylphenyl phosphate, and triisopropyl phosphate.

Among the plasticizers, preferred is at least one selected from the group consisting of dihexyl adipate (DHA), triethylene glycol-di-2-ethylhexanoate (3GO), tetraethylene glycol-di-2-ethylhexanoate (4GO), triethylene glycol-di-2-ethylbutyrate (3GH), tetraethylene glycol-di-2-ethylbutyrate (4GH), tetraethylene glycol-di-n-heptanoate (4G7), and triethylene glycol-di-n-heptanoate (3G7). More preferred are triethylene glycol-di-2-ethyl butyrate (3GH), triethylene glycol-di-n-heptanoate (3G7), and triethylene glycol-di-2-ethylhexanoate (3GO), and still more preferred is triethylene glycol-di-2-ethylhexanoate (3GO).

The adhesive of the present invention may contain known additives such as adhesion modifiers, tackifiers, emulsifiers, softeners, microparticles, fillers, pigments, dyes, silane coupling agents, antioxidants, surfactants, and waxes, if necessary.

The lower limit of the viscosity at 25°C of the adhesive of the present invention as measured in conformity with JIS Z 8803:2011 with a rotational digital viscometer (e.g., Brookfield Engineering Laboratories, Inc., model "DV-II+Pro") is preferably 10 mPa·s and the upper limit thereof is preferably 20 Pa·s. When the viscosity at 25°C is within this range, the adhesive has excellent handleability at room temperature. The lower limit of the viscosity at 25°C is more preferably 0.1 Pa·s and the upper limit thereof is more preferably 10 Pa·s.

In the adhesive of the present invention, the reactive diluent can be reacted to be crosslinked and cured. Thus, the adhesive in bonding can be in a liquid (sol) state at room temperature to exhibit high handleability, and reacting the reactive diluent to cause crosslink and curing reactions allows the adhesive to exhibit high adhesiveness to organic materials and inorganic materials. The reaction of the reactive diluent to cause crosslinking and curing reactions can prevent the reactive diluent from bleeding out.

Any method may be used to react the reactive diluent to cause crosslinking and curing reactions. When the trigger is heat, a method including heating may be used. When the trigger is light, a method including irradiation with light using an ultraviolet light irradiation device such as an ultra-high pressure mercury lamp may be used.

The temperature in heating and the wavelength and illuminance in irradiation with light may be appropriately determined according to factors such as the types of the reactive diluent and polymerization initiator.

The adhesive of the present invention may be produced by any method. For example, the adhesive may be produced by a method including mixing the modified polyvinyl acetal, the reactive diluent, the polymerization initiator, and if necessary, additives.

### - Advantageous Effects of Invention

The present invention provides an adhesive that has excellent adhesiveness to both organic materials (particularly, polycarbonate, acrylic, and nylon) and inorganic materials, is capable of exhibiting excellent transparency and toughness, and also has excellent handleability.

### BRIEF DESCRIPTION OF DRAWINGS

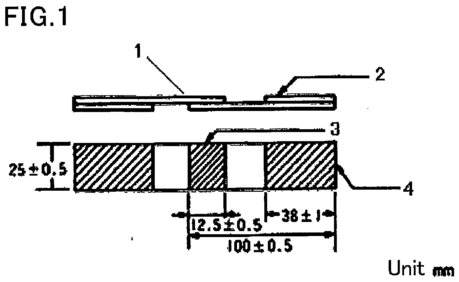

Fig. 1 is a schematic view illustrating a specimen used for testing the tensile lap-shear strength of adhesive in examples.

### DESCRIPTION OF EMBODIMENTS

Embodiments of the present invention will be specifically described in the following with reference to, but not limited to, examples.

### <Preparation of modified polyvinyl butyral>

### (1) Preparation of modified polyvinyl butyral 1

Polyvinyl alcohol (240 g) with a degree of polymerization of 600, a degree of saponification of 99 mol%, and 1.7 mol% of a constitutional unit having an amino group (-NH₂) represented by Formula (3) above was added to 1,800 g of pure water. The mixture was stirred at 90°C for about two hours to dissolve the polyvinyl alcohol. The solution was cooled to 40°C, followed by the addition of 170 g of 35% by weight hydrochloric acid and 275 g of n-butyraldehyde. The solution temperature was maintained at 40°C to allow acetalization reaction to proceed, whereby the reaction product was precipitated.

Thereafter, the solution temperature was maintained at 40°C for three hours to complete the reaction. Neutralization, water washing, and drying were conducted by conventional methods to give powder of a modified polyvinyl butyral 1.

The obtained modified polyvinyl butyral 1 was dissolved into dimethyl sulfoxide (DMSO-d₆) and analyzed by ¹³C-NMR (nuclear magnetic resonance) spectroscopy. The analysis showed that the degree of butyralization was 77.5 mol%, the hydroxy group content was 20.0 mol%, the acetyl group content was 0.4 mol%, and the amount of the constitutional unit having an imine structure represented by Formula (5) below (R³ is hydrogen and R⁴ is an n-butyl group) was 1.7 mol%.

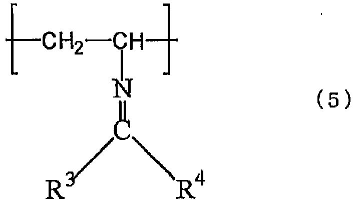

### (2) Preparation of modified polyvinyl butyral 2

Polyvinyl alcohol (250 g) with a degree of polymerization of 600, a degree of saponification of 99 mol%, and 8.3 mol% of a constitutional unit having an amino group (-NH₂) represented by Formula (3) above was added to 1,800 g of pure water. The mixture was stirred at 90°C for about two hours to dissolve the polyvinyl alcohol. The solution was cooled to 40°C, followed by the addition of 170 g of 35% by weight hydrochloric acid and 150 g of n-butyraldehyde. The solution temperature was maintained at 40°C to allow acetalization reaction to proceed, whereby the reaction product was precipitated.

Thereafter, the solution temperature was maintained at 40°C for three hours to complete the reaction. Neutralization, water washing, and drying were conducted by conventional methods to give powder of a modified polyvinyl butyral 2.

The obtained modified polyvinyl butyral 2 was dissolved into dimethylsulfoxide (DMSO-d₆) and analyzed by ¹³C-NMR (nuclear magnetic resonance) spectroscopy. The analysis showed that the degree of butyralization was 70.0 mol%, the hydroxy group content was 20.9 mol%, the acetyl group content was 0.3 mol%, and the amount of the constitutional unit having an imine structure represented by Formula (5) above (R³ is hydrogen and R⁴ is an n-butyl group) was 8.3 mol%.

### (3) Preparation of modified polyvinyl butyral 3

Polyvinyl alcohol (250 g) with a degree of polymerization of 200, a degree of saponification of 99 mol%, and 1.7 mol% of a constitutional unit having an amino group (-NH₂) represented by Formula (3) above was added to 1,800 g of pure water. The mixture was stirred at 90°C for about two hours to dissolve the polyvinyl alcohol. The solution was cooled to 40°C, followed by the addition of 170 g of 35% by weight hydrochloric acid and 120 g of n-butyraldehyde. The solution temperature was maintained at 40°C to allow acetalization reaction to proceed, whereby the reaction product was precipitated.

Thereafter, the solution temperature was maintained at 40°C for three hours to complete the reaction. Neutralization, water washing, and drying were conducted by conventional methods to give powder of a modified polyvinyl butyral 3.

The obtained modified polyvinyl butyral 3 was dissolved into dimethylsulfoxide (DMSO-d₆) and analyzed by ¹³C-NMR (nuclear magnetic resonance) spectroscopy. The analysis showed that the degree of butyralization was 77.5 mol%, the hydroxy group content was 20.0 mol%, the acetyl group content was 0.4 mol%, and the amount of the constitutional unit having an imine structure represented by Formula (5) above (R³ is hydrogen and R⁴ is an n-butyl group) was 1.7 mol%.

### (4) Preparation of modified polyvinyl butyral 4

Polyvinyl alcohol (240 g) with a degree of polymerization of 1,200, a degree of saponification of 99 mol%, and 1.7 mol% of a constitutional unit having an amino group (-NH₂) represented by Formula (3) above was added to 1,800 g of pure water. The mixture was stirred at 90°C for about two hours to dissolve the polyvinyl alcohol. The solution was cooled to 40°C, followed by the addition of 170 g of 35% by weight hydrochloric acid and 275 g of n-butyraldehyde. The solution temperature was maintained at 40°C to allow acetalization reaction to proceed, whereby the reaction product was precipitated.

Thereafter, the solution temperature was maintained at 40°C for three hours to complete the reaction. Neutralization, water washing, and drying were conducted by conventional methods to give powder of a modified polyvinyl butyral 4.

The obtained modified polyvinyl butyral 4 was dissolved into dimethylsulfoxide (DMSO-d₆) and analyzed by ¹³C-NMR (nuclear magnetic resonance) spectroscopy. The analysis showed that the degree of butyralization was 77.5 mol%, the hydroxy group content was 20.0 mol%, the acetyl group content was 0.4 mol%, and the amount of the constitutional unit having an imine structure represented by Formula (5) above (R³ is hydrogen and R⁴ is an n-butyl group) was 1.7 mol%.

### <Preparation of polyvinyl butyral>

Polyvinyl alcohol (250 g) with a degree of polymerization of 650 and a degree of saponification of 99 mol% was added to 1,800 g of pure water. The mixture was stirred at 90°C for about two hours to dissolve the polyvinyl alcohol. The solution was cooled to 40°C, followed by the addition of 170 g of 35% by weight hydrochloric acid and 275 g of n-butyraldehyde. The solution temperature was maintained at 40°C to allow acetalization reaction to proceed, whereby the reaction product was precipitated.

Thereafter, the solution temperature was maintained at 40°C for three hours to complete the reaction. Neutralization, water washing, and drying were conducted by conventional methods to give powder of a polyvinyl butyral.

The obtained polyvinyl butyral was dissolved into dimethylsulfoxide (DMSO-d₆) and analyzed by ¹³C-NMR (nuclear magnetic resonance) spectroscopy. The analysis showed that the degree of acetalization was 65.0 mol%, the hydroxy group content was 34.0 mol%, and the acetyl group content was 1.0 mol%.

### (Example 1)

To 100 parts by weight of the modified polyvinyl butyral 2 was added 100 parts by weight of a (meth)acrylic reactive diluent (30% by weight of methyl methacrylate, 40% by weight of ethyl acrylate, and 30% by weight of 2-hydroxyethyl acrylate) as a reactive diluent, followed by sufficient stirring and mixing. Vacuum deaeration treatment was then performed using a vacuum-type deaeration device (Thinky Corporation, AV-310) at 1,200 rpm and 1.0 kPa for three minutes to give a mixed composition. The mixed composition was sufficiently blended with a perester compound (NOF Corporation, Perbutyl 355) as a thermal polymerization initiator in an amount of 5.0 parts by weight relative to 100 parts by weight of the reactive diluent, whereby an adhesive was obtained. The obtained adhesive was in a liquid (sol) state at room temperature.

### (Example 2, Comparative Example 1)

An adhesive was obtained in the same manner as in Example 1 except that the type of the modified polyvinyl butyral, the amount of the reactive diluent, and the like were as shown in Table 1. The obtained adhesive was in a liquid (sol) state at room temperature.

### (Example 3)

To 100 parts by weight of the modified polyvinyl butyral 2 was added 100 parts by weight of a bisphenol A epoxy monomer (Mitsubishi Chemical Corporation, jER828) as a reactive diluent, followed by heating and dissolving. Vacuum deaeration treatment was then performed using a vacuum-type deaeration device (Thinky Corporation, AV-310) at 1,200 rpm and 1.0 kPa for three minutes to give a mixed composition. This mixed composition was cooled to 23°C, followed by the addition of 25 parts by weight of 2,4-diamino-6-[2'-undecylimidazolyl-(1')]-ethyl-s-triazine (Shikoku Chemicals Corporation, C11Z-A) as a thermal polymerization initiator, and further followed by sufficient stirring and mixing to give an adhesive. The obtained adhesive was in a liquid (sol) state at room temperature.

### (Example 4, Comparative Example 2)

An adhesive was obtained in the same manner as in Example 3 except that the type of the modified polyvinyl butyral, the amount of the reactive diluent, and the like were as shown in Table 1. The obtained adhesive was in a liquid (sol) state at room temperature.

### (Evaluation)

The adhesives obtained in the examples and comparative examples were evaluated by the following method.

The results are shown in Table 1.

### (Evaluation of adhesiveness to various materials)

Specimens as shown in Fig. 1 were prepared in conformity with the method for testing tensile lap-shear strength of adhesive specified in JIS K 6850. The substrates as the evaluation subjects were glass, aluminum, SUS, polycarbonate (PC), acrylic, and nylon. The adhesive was applied to bond the substrates and heated in an oven at 130°C for 30 minutes to be cured. Thereafter, the tensile lap-shear strength was measured using a Tensilon universal material tester (A & D Company, Limited, RTC-1350A).

**[Table 1]**

| | (Modified) polyvinyl acetal | | | | | Reactive diluent (parts by weight) | | Polymerization initiator (parts by weight) | | Tensile lap-shear strength (MPa) | | | | | |
|---|---|---|---|---|---|---|---|---|---|---|---|---|---|---|---|
| | Degree of polymerization | Degree of acetalization (mol%) | Acetyl group content (mol%) | Hydroxy group content (mol%) | Imine modification content (mol%) | (Meth) acrylic reactive diluent | Epoxy reactive diluent | Perester polymerization initiator | Imidazole polymerization initiator | Glass | Aluminum | SUS | PC | Acrylic | Nylon |
| Example 1 | 600 | 70.0 | 0.3 | 20.9 | 8.3 | 100 | - | 5.0 | - | 512 | 45.3 | 40.3 | 7.7 | 8.7 | 10.2 |
| Example 2 | 600 | 77.5 | 0.4 | 20.0 | 1.7 | 100 | - | 5.0 | - | 43.0 | 38.0 | 35.4 | 7.6 | 8.2 | 9.1 |
| Comparative Example 1 | 650 | 65.0 | 1.0 | 34.0 | - | 100 | - | 5.0 | - | 13.6 | 15.0 | 13.4 | 2.5 | 1.5 | 1.8 |
| Example 3 | 600 | 70.0 | 0.3 | 20.9 | 8.3 | - | 100 | - | 25 | 53.0 | 35.7 | 27.3 | 3.4 | 4.0 | 13.3 |
| Example 4 | 600 | 77.5 | 0.4 | 20.0 | 1.7 | - | 100 | - | 25 | 48.0 | 33.2 | 27.2 | 3.3 | 3.9 | 13.2 |
| Comparative Example 2 | 650 | 65.0 | 1.0 | 34.0 | - | - | 100 | - | 25 | 13.6 | 8.6 | 7.1 | 2.8 | 1.0 | 3.4 |

Table 1 shows that the adhesives of Examples 1 to 4, each prepared using a modified polyvinyl butyral having an imine structure, exhibit excellent adhesiveness both when the adherends are inorganic materials (i.e., glass, aluminum, and SUS) and when the adherends are organic materials (i.e., polycarbonate (PC), acrylic, and nylon) as compared with the adhesives of Comparative Examples 1 and 2, each prepared from polyvinyl butyral. This indicates that the adhesives of Examples 1 to 4 are usable for a wide range of adherends. Table 1 also shows that in the case where the modified polyvinyl acetal having an imine structure contains a large amount a constitutional unit having an imine structure, the adhesive tends to have high adhesiveness particularly when the adherends are inorganic materials.

### (Example 5)

To 100 parts by weight of the modified polyvinyl butyral 3 was added 100 parts by weight of a (meth)acrylic reactive diluent (30% by weight of methyl methacrylate, 40% by weight of ethyl acrylate, and 30% by weight of 2-hydroxyethyl acrylate) as a reactive diluent, followed by sufficient stirring and mixing. Vacuum deaeration treatment was then performed using a vacuum-type deaeration device (Thinky Corporation, AV-310) at 1,200 rpm and 1.0 kPa for three minutes to give a mixed composition. The mixed composition was sufficiently blended with a perester compound (NOF Corporation, Perbutyl 355) as a thermal polymerization initiator in an amount of 5.0 parts by weight relative to 100 parts by weight of the reactive diluent, whereby an adhesive was obtained. The obtained adhesive was in a liquid (sol) state at room temperature.

### (Examples 6 and 7)

An adhesive was obtained in the same manner as in Example 5 except that the type of the modified polyvinyl butyral was as shown in Table 2. The obtained adhesive was in a liquid (sol) state at room temperature.

### (Example 8)

To 100 parts by weight of the modified polyvinyl butyral 3 was added 100 parts by weight of a bisphenol A epoxy monomer (Mitsubishi Chemical Corporation, jER828) as a reactive diluent, followed by heating and dissolving. Vacuum deaeration treatment was then performed using a vacuum-type deaeration device (Thinky Corporation, AV-310) at 1,200 rpm and 1.0 kPa for three minutes to give a mixed composition. This mixed composition was cooled to 23°C, followed by the addition of 25 parts by weight of 2,4-diamino-6-[2'-undecylimidazolyl-(1')]-ethyl-s-triazine (Shikoku Chemicals Corporation, C11Z-A) as a thermal polymerization initiator, and further followed by sufficient stirring and mixing to give an adhesive. The obtained adhesive was in a liquid (sol) state at room temperature.

### (Examples 9 and 10)

An adhesive was obtained in the same manner as in Example 8 except that the type of the modified polyvinyl butyral was as shown in Table 2. The obtained adhesive was in a liquid (sol) state at room temperature.

### (Evaluation)

The adhesives obtained in the examples and comparative examples were evaluated concerning the adhesiveness to various materials by the above method.

The results are shown in Table 2.

**[Table 2]**

| | (Modified) polyvinyl acetal | | | | | Reactive diluent (parts by weight) | | Polymerization initiator (parts by weight) | | Tensile lap-shear strength (MPa) | | | | | |
|---|---|---|---|---|---|---|---|---|---|---|---|---|---|---|---|
| | Degree of polymerization | Degree of acetalocation (mol%) | Acetyl group content (mol%) | Hydroxy group content (mol%) | Imine modification content (mol%) | (Meth) acrylic reactive diluent | Epoxy reactive diluent | Parester polymerization initiator | Imidazole polymerization initiator | Glass | Aluminum | SUS | PC | Acrylic | Nylon |
| Example 5 | 200 | 77.5 | 0.4 | 20.0 | 1.7 | 100 | - | 5.0 | - | 42.0 | 34.0 | 32.1 | 7.5 | 8.0 | 8.9 |
| Example 6 | 600 | 77.5 | 0.4 | 20.0 | 1.7 | 100 | - | 5.0 | - | 43.0 | 38.0 | 35.4 | 7.6 | 8.2 | 9.1 |
| Example 7 | 1200 | 77.5 | 0.4 | 20.0 | 1.7 | 100 | - | 5.0 | - | 44.1 | 38.2 | 35.5 | 7.7 | 8.2 | 9.1 |
| Example 8 | 200 | 77.5 | 0.4 | 20.0 | 1.7 | - | 100 | - | 25 | 47.7 | 33.1 | 27.0 | 3.3 | 3.9 | 13.2 |
| Example 9 | 600 | 77.5 | 0.4 | 20.0 | 1.7 | - | 100 | - | 25 | 48.0 | 33.2 | 272 | 3.3 | 3.9 | 13.2 |
| Example 10 | 1200 | 77.5 | 0.4 | 20.0 | 1.7 | - | 100 | - | 25 | 48.0 | 33.3 | 27.2 | 3.4 | 4.0 | 13.3 |

Table 2 indicates that adhesives within the scope of these examples can exhibit excellent adhesiveness both when the adherends are inorganic materials and when the adherends are organic materials regardless of the degree of polymerization of the modified polyvinyl butyral having an imine structure.

### (Example 11)

To 100 parts by weight of the modified polyvinyl butyral 1 was added 60 parts by weight of a (meth)acrylic reactive diluent (30% by weight of methyl methacrylate, 40% by weight of ethyl acrylate, and 30% by weight of 2-hydroxyethyl acrylate) as a reactive diluent, followed by sufficient stirring and mixing. Vacuum deaeration treatment was then performed using a vacuum-type deaeration device (Thinky Corporation, AV-310) at 1,200 rpm and 1.0 kPa for three minutes to give a mixed composition. The mixed composition was sufficiently blended with a perester compound (NOF Corporation, Perbutyl 355) as a thermal polymerization initiator in an amount of 3.0 parts by weight, whereby an adhesive was obtained. The obtained adhesive was in a liquid (sol) state at room temperature.

### (Examples 12 to 28)

An adhesive was obtained in the same manner as in Example 11 except that the type of the modified polyvinyl butyral, the amount of the reactive diluent, and the like were as shown in Table 3. The obtained adhesive was in a liquid (sol) state at room temperature.

### (Example 29)

To 100 parts by weight of the modified polyvinyl butyral 1 was added 60 parts by weight of a bisphenol A epoxy monomer (Mitsubishi Chemical Corporation, jER828) as a reactive diluent, followed by heating and dissolving. Vacuum deaeration treatment was then performed using a vacuum-type deaeration device (Thinky Corporation, AV-310) at 1,200 rpm and 1.0 kPa for three minutes to give a mixed composition. This mixed composition was cooled to 23°C, followed by the addition of 15 parts by weight of 2,4-diamino-6-[2'undecylimidazolyl-(1¹)]-ethyl-s-triazine (Shikoku Chemicals Corporation, C11Z-A) as a thermal polymerization initiator, and further followed by sufficient stirring and mixing to give an adhesive. The obtained adhesive was in a liquid (sol) state at room temperature.

### (Examples 30 to 46)

An adhesive was obtained in the same manner as in Example 29 except that the type of the modified polyvinyl butyral, the amount of the reactive diluent, and the like were as shown in Table 4. The obtained adhesive was in a liquid (sol) state at room temperature.

### (Evaluation)

The adhesives obtained in the examples and comparative examples were evaluated concerning the adhesiveness to various materials by the above method.

The results are shown in Tables 3 and 4.

**[Table 3]**

| | (Modified) polyvinyl acetal | | | | | Reactive diluent (parts by weight) | | Polymerization initiator (parts by weight) | | Tensile lap-shear strength (MPa) | | | | | |
|---|---|---|---|---|---|---|---|---|---|---|---|---|---|---|---|
| | Degree of polymerization | Degree of acetalization (mol%) | Acetyl group content (mol%) | Hydroxy group content (mol%) | Imine modification content (mol%) | (Meth) acrylic reactive diluent | Epoxy reactive diluent | Perester polymerization initiator | Imidazole polymerization initiator | Glass | Aluminum | SUS | PC | Acrylic | Nylon |
| Example 11 | 600 | 77.5 | 0.4 | 20.0 | 1.7 | 60 | - | 3.0 | - | 26.3 | 4.4 | 7.8 | 9.8 | 8.5 | 5.4 |
| Example 12 | 600 | 77.5 | 0.4 | 20.0 | 1.7 | 100 | - | 5.0 | - | 43.0 | 38.0 | 35.4 | 7.6 | 8.2 | 9.1 |
| Example 13 | 600 | 77.5 | 0.4 | 20.0 | 1.7 | 150 | - | 7.5 | - | 22.9 | 22.9 | 19.8 | 6.6 | 7.0 | 8.7 |
| Example 14 | 600 | 77.5 | 0.4 | 20.0 | 1.7 | 300 | - | 15.0 | - | 20.5 | 20.7 | 18.2 | 6.2 | 6.1 | 8.0 |
| Example 15 | 600 | 77.5 | 0.4 | 20.0 | 1.7 | 900 | - | 45.0 | - | 19.3 | 19.2 | 17.1 | 4.4 | 52 | 6.4 |
| Example 16 | 600 | 77.5 | 0.4 | 20.0 | 1.7 | 1500 | - | 75.0 | - | 14.1 | 15.8 | 15.2 | 4.0 | 3.8 | 4.1 |
| Example 17 | 600 | 77.5 | 0.4 | 20.0 | 1.7 | 2000 | - | 125.0 | - | 13.9 | 15.5 | 14.9 | 3.9 | 3.6 | 3.8 |
| Example 18 | 600 | 77,5 | 0.4 | 20.0 | 1.7 | 3000 | - | 150.0 | - | 13.7 | 15.3 | 14.1 | 3.6 | 3.2 | 3.0 |
| Example 19 | 600 | 77.5 | 0.4 | 20.0 | 1.7 | 10000 | - | 500.0 | - | 13.7 | 15.2 | 13.3 | 3.0 | 2.8 | 2.6 |
| Example 20 | 600 | 70.0 | 0.3 | 20.9 | 8.3 | 60 | - | 3.0 | - | 27.9 | 6.8 | 8.5 | 100 | 8.7 | 5.8 |
| Example 21 | 600 | 70.0 | 0.3 | 20.9 | 8.3 | 100 | - | 5.0 | - | 51.2 | 45.3 | 40.3 | 7.7 | 8.7 | 10.2 |
| Example 22 | 600 | 70.0 | 0.3 | 20.9 | 8.3 | 150 | - | 7.5 | - | 36.3 | 32.4 | 20.2 | 6.8 | 7.5 | 92 |
| Example 23 | 600 | 70.0 | 0.3 | 20.9 | 8.3 | 300 | - | 15.0 | - | 20.7 | 21.0 | 18.5 | 6.3 | 6.2 | 8.1 |
| Example 24 | 600 | 70.0 | 0.3 | 20.9 | 8.3 | 900 | - | 45.0 | - | 19.4 | 19.2 | 18.0 | 4.6 | 6.1 | 6.8 |
| Example 25 | 600 | 70.0 | 0.3 | 20.9 | 8.3 | 1500 | - | 75.0 | - | 18.4 | 19.1 | 17.7 | 4.4 | 6.0 | 6.5 |
| Example 26 | 600 | 70.0 | 0.3 | 20.9 | 8.3 | 2000 | - | 125.0 | - | 18.0 | 18.8 | 17.4 | 42 | 5.6 | 6.1 |
| Example 27 | 600 | 70.0 | 0.3 | 20.9 | 8.3 | 3000 | - | 150.0 | - | 14.1 | 15.6 | 14.8 | 3.7 | 3.3 | 3.4 |
| Example 28 | 600 | 70.0 | 0.3 | 20.9 | 8.3 | 10000 | - | 500.0 | - | 13.8 | 15.3 | 14.2 | 3.1 | 3.0 | 2.9 |

**[Table 4]**

| | (Modified) polyvinyl acetal | | | | | Reactive diluent (parts by weight) | | Polymerization initiator (parts by weight) | | Tensile lap-shear strength (MPa) | | | | | |
|---|---|---|---|---|---|---|---|---|---|---|---|---|---|---|---|
| | Degree of polymerization | Degree of acetalization (mol%) | Acetyl group content (mol%) | Hydroxy group content (mol%) | Imine modification content (mol%) | (Meth) acrylic reactive diluent | Epoxy reactive diluent | Perester polymerization initiator | Imidazole polymerization initiator | Glass | Aluminum | SUS | PC | Acrylic | Nylon |
| Example 29 | 600 | 77.5 | 0.4 | 20.0 | 1.7 | - | 60 | - | 15 | 26.0 | 4.5 | 7.9 | 9.8 | 8.5 | 5.4 |
| Example 30 | 600 | 77.5 | 0.4 | 20.0 | 1.7 | - | 100 | - | 25 | 48.0 | 33.2 | 27.2 | 3.3 | 3.9 | 13.2 |
| Example 31 | 600 | 77.5 | 0.4 | 20.0 | 1.7 | - | 150 | - | 37.5 | 39.4 | 24.0 | 20.8 | 2.8 | 3.5 | 12.9 |
| Example 32 | 600 | 77.5 | 0.4 | 20.0 | 1.7 | - | 300 | - | 75 | 33.1 | 20.2 | 18.1 | 2.6 | 3.3 | 12.5 |
| Example 33 | 600 | 77.5 | 0.4 | 20.0 | 1.7 | - | 900 | - | 225 | 31.1 | 18.2 | 17.8 | 2.4 | 3.1 | 12.1 |
| Example 34 | 600 | 77.5 | 0.4 | 20.0 | 1.7 | - | 1500 | - | 375 | 23.0 | 15.8 | 15.2 | 2.4 | 3.1 | 12.0 |
| Example 35 | 600 | 77.5 | 0.4 | 20.0 | 1.7 | - | 2000 | - | 625 | 13.9 | 15.5 | 14.9 | 2.2 | 3.0 | 10.9 |
| Example 36 | 600 | 77.5 | 0.4 | 20.0 | 1.7 | - | 3000 | - | 750 | 13.8 | 10.5 | 12.9 | 2.1 | 3.0 | 10.8 |
| Example 37 | 600 | 77.5 | 0.4 | 20.0 | 1.7 | - | 10000 | - | 2500 | 13.8 | 9.4 | 9.3 | 2.0 | 2.9 | 9.9 |
| Example 38 | 600 | 70.0 | 0.3 | 20.9 | 8.3 | - | 60 | - | 15 | 26.1 | 4.6 | 8.0 | 9.8 | 8.5 | 5.5 |
| Example 39 | 600 | 70.0 | 0.3 | 20.9 | 8.3 | - | 100 | - | 25 | 53.0 | 35.7 | 27.3 | 3.4 | 4.0 | 13.3 |
| Example 40 | 600 | 70.0 | 0.3 | 20.9 | 8.3 | - | 150 | - | 37.5 | 49.0 | 30.8 | 24.5 | 2.9 | 3.8 | 12.8 |
| Example 41 | 600 | 70.0 | 0.3 | 20.9 | 8.3 | - | 300 | - | 75 | 40.2 | 27.8 | 20.1 | 2.7 | 3.5 | 12.6 |
| Example 42 | 600 | 70.0 | 0.3 | 20.9 | 8.3 | - | 900 | - | 225 | 34.5 | 22.3 | 19.9 | 2.6 | 3.4 | 12.5 |
| Example 43 | 600 | 70.0 | 0.3 | 20.9 | 8.3 | - | 1500 | - | 375 | 31.0 | 22.1 | 19.9 | 2.6 | 3.3 | 12.5 |
| Example 44 | 600 | 70.0 | 0.3 | 20.9 | 8.3 | - | 2000 | - | 625 | 30.2 | 21.5 | 19.8 | 2.2 | 3.3 | 12.3 |
| Example 45 | 600 | 70.0 | 0.3 | 20.9 | 8.3 | - | 3000 | - | 750 | 29.8 | 16.8 | 19.6 | 2.2 | 3.3 | 12.1 |
| Example 46 | 600 | 70.0 | 0.3 | 20.9 | 8.3 | - | 10000 | - | 2500 | 14.2 | 15.9 | 16.6 | 2.1 | 3.1 | 10.8 |

Tables 3 and 4 indicate that even in the case where the amounts of the reactive diluent and polymerization initiator are changed, adhesives within the scope of these examples can exhibit adhesiveness both when the adherends are inorganic material and when the adherend are organic materials. Here, the tables indicate that the adhesiveness tends to decrease as the amounts of the reactive diluent and polymerization initiator are increased. This is presumably because as the amounts of the reactive diluent and polymerization initiator are increased, the amount of the modified polyvinyl acetal having an imine structure is relatively decreased, which in turn results in a decrease in the amount of the constitutional unit having an imine structure.

### INDUSTRIAL APPLICABILITY

The present invention provides an adhesive that has excellent adhesiveness to both organic materials (particularly, polycarbonate, acrylic, and nylon) and inorganic materials, is capable of exhibiting excellent transparency and toughness, and also has excellent handleability.

### REFERENCE SIGNS LIST

1 Substrate
2 Support (of the same thickness and material as the substrate)
3 Bonding portion
4 Grip

## Claims

1. An adhesive comprising:
a modified polyvinyl acetal having an imine structure;
a reactive diluent; and
a polymerization initiator.

2. The adhesive according to claim 1,
wherein the reactive diluent is a (meth)acrylic reactive diluent or an epoxy reactive diluent.

3. The adhesive according to claim 1 or 2,
wherein the amount of the reactive diluent relative to 100 parts by weight of the modified polyvinyl acetal having an imine structure is 60 to 5,000 parts by weight.

## Patentansprüche

1. Klebemittel, umfassend:
ein modifiziertes Polyvinylacetal mit einer Iminstruktur,
ein reaktives Verdünnungsmittel und
einen Polymerisationsinitiator.

2. Klebemittel nach Anspruch 1,
wobei das reaktive Verdünnungsmittel ein reaktives (Meth)acryl-Verdünnungsmittel oder ein reaktives Epoxidverdünnungsmittel ist.

3. Klebemittel nach Anspruch 1 oder 2,
wobei die Menge des reaktiven Verdünnungsmittels bezogen auf 100 Gewichtsteile des modifizierten Polyvinylacetals mit einer Iminstruktur 60 bis 5.000 Gewichtsteile beträgt.

## Revendications

1. Adhésif comprenant :
un polyvinylacétal modifié présentant une structure imine ;
un diluant réactif ; et
un initiateur de polymérisation.

2. Adhésif selon la revendication 1,
dans lequel le diluant réactif est un diluant réactif (méth)acrylique ou un diluant réactif époxy.

3. Adhésif selon la revendication 1 ou 2,
dans lequel la quantité du diluant réactif par rapport à 100 parties en masse du polyvinylacétal modifié présentant une structure imine est de 60 à 5 000 parties en masse.
